# EUROPEAN PATENT APPLICATION

(11) **EP 3 685 656 A1**
(43) Date of publication of application: **29.07.2020**
(21) Application number: 19153225.8
(22) Date of filing: 23.01.2019
(51) Int. Cl.: A01G 7/04, F21V 14/04

(54) **SYSTEM FOR CONTROLLING A LIGHT-DEPENDENT CONDITION OF AN ORGANISM AND METHOD OF DETERMINING A CONFIGURATION OF THE SYSTEM**

(71) Applicant: Merck Patent GmbH, 64293 Darmstadt (DE)
(72) Inventor: Szabo, Daniel, 20457 Hamburg (DE); Dertinger, Stephan, 69120 Heidelberg (DE); Schaberger, Michael, 64347 Griesheim (DE)

(57) **Abstract**

The invention relates to the field of controlling the growth of an organism, or a plurality of organisms, such as particularly one more plants. Specifically, the invention is directed to a modulating system for modulating light to which an organism is to be exposed.

## Description

### FIELD OF THE INVENTION

The present invention relates to the field of controlling the growth of an organism, or of a plurality of organisms, such as particularly one or more plants, by means of controlling properties of light to which the one or more organisms are exposed. Specifically, the invention is directed to a modulating system for modulating light to which an organism is to be exposed, a method of determining the configuration of the modulating system and a related processing platform, and a system for controlling a light-dependent condition of an organism, the system comprising said modulating system and said processing platform.

### BACKGROUND

Modern agriculture and livestock farming cannot be thought of without also thinking of a large variety of methods and systems by which mankind seeks to specifically define and control specific conditions in which the respective organisms, such as plants, animals, fungi, are placed to influence their growth in order to optimize their growth rates or their properties or properties of their fruits or offspring. Similarly, in science and medicine, artificial cultivation of microorganisms, such as bacteria, is typically performed under well-defined and controlled conditions. Typically, these controlled conditions comprise one or more of fertilizer, food amount and composition, pharmaceuticals, temperature, intensity and spectral properties of light, and humidity to which the organisms are exposed.

Specifically relating to light as a condition, methods and systems using artificial light sources, shading means or at least partially transparent materials, such as plastic or metal foils or glass (e.g. in greenhouses), to adjust or vary the intensity of light to which the cultivated organisms are exposed are well known.

However, there remains a desire to further increase the effectiveness of light-controlled growth of organisms, particularly in order to achieve even better growth rates and/or the ability to selectively optimize particular properties of the cultivated organisms or their fruits or offspring.

### SUMMARY OF THE INVENTION

Accordingly, it is an object of the present invention to provide systems and methods to further improve the effectiveness of light-controlled growth of organisms.

A solution to this problem is provided by the teaching of the independent claims. Various preferred embodiments of the present invention are provided by the teachings of the dependent claims.

A first aspect of the invention is directed to a modulating system for modulating light to which an organism (or multiple organisms), preferably a plant, is to be exposed. The system comprises a light modulation arrangement comprising one or more light modulation devices being adapted to modulate, by means of a respective light modulating material, light to be applied to the organism. The light modulation arrangement is reconfigurable such that there are at least two selectable configurations of the light modulation arrangement which cause a respect different modulation of the light to be applied to the organism.

The terms "light modulation", "light-modulating" and similar, as used herein, refer to artificially adjusting spectral properties of incoming light, such as light from a natural light source (usually direct or indirect (e.g. reflected or scattered) sun light) or from one or more artificial light sources to which a specific material ("light-modulating material") is exposed. The adjustment of the spectral properties of the incoming light is thereby caused by the intrinsic properties of that light-modulating material in such a way that the resulting wavelength spectrum of the outgoing adjusted light emitted or reflected from the light-modulating material comprises one or more differences from the wavelength spectrum of the incoming light . Furthermore, at least one of these differences results from wavelength shifting (i.e. at least one component of the resulting spectrum of the outgoing adjusted light results from a wavelength-shift of a corresponding component in the spectrum of the incoming light). In particular, such light modulation may be based on wavelength up-conversion or down-conversion (wavelength-shifting (esp. Stokes or Anti-Stokes shift, e.g. luminescence)), selective reflection, or selective filtering of the incoming light by the light-modulating material. Accordingly, a mere intensity modulation (i.e. without wavelength shifting) of the incoming light, e.g. by a light shade or similar, shall not be considered a light modulation in the sense of the present invention.

A light modulating material may particularly comprise one or more light-modulating pigments, dyes and/or luminescent materials. The term "pigments", as used herein, refers to materials that are insoluble in an aqueous solution and change the color of reflected or transmitted light as the result of wavelength-selective absorption and/or reflection. The term "pigments" refers particularly to each of inorganic pigments, organic pigments and inorganic-organic hybrid pigments. The term "dyes", as used herein, refers to colored substances that are soluble in an aqueous solution and change the color as the result of wavelength-selective absorption of irradiation. Particularly, such light modulating dye may be an organic dye.

The spectrum, at least of the incoming light, may particularly comprise one or more spectral components in the ultra-violet (UV), visible (VIS), and/or near infrared (NIR) ranges of the electromagnetic spectrum. Herein, the terms "UV", "VIS" and "NIR" refer preferably to electromagnetic radiation having a wavelength in the range from 100 nm to 389 nm for UV, from 390 nm to 700 nm for VIS, and from 701 nm to 1000 nm.

A particular (first) light modulation is different from another (second) light modulation, if its effect on the same incoming light is different such that the resulting wavelength spectra of the first and second light modulations differ from each other by more than a mere ratio, such as a norming or dampening factor. For example, there is a difference between two spectra, if they have (i) one or more individual spectral components not being present in the respective other spectrum, or (ii) a different intensity distribution across shared spectral components. Accordingly, the at least two selectable configurations of the light modulation arrangement, each cause a respective different modulation of the light to be applied to the organism and thus a different wavelength spectrum of that light.

The term "organism" or "organisms", as used herein, refers to one (respectively more) of a multi-cellular life form, such as a plant, an animal (which may particularly be a human being), and a fungus, or to a unicellular life form, such as a protist, bacterium, and an archaeon. The term "organism" relates to both prokaryotic organisms and eukaryotic organisms. Whenever herein reference is made to an "organism" in the singular, this is meant to implicitly also refer to multiple organisms as an alternative. Accordingly, the systems and methods described herein may similarly be applied at a given point in time to either one organism or multiple organisms.

Where the term "comprising" is used in the present description and claims, it does not exclude other elements or steps. Where an indefinite or definite article is used when referring to a singular noun e.g. "a" or "an", "the", this includes a plural of that noun unless something else is specifically stated.

The terms "first", "second", "third" and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

The present invention particularly provides a reconfigurable solution for modulating light to which an organism (or a set of multiple organisms), preferably a plant, is to be exposed. Specifically, the solution may particularly be used to achieve an enhancement of at least one growth effect of the organism(s) to which the modulated light it is applied. Specifically, the enhanced growth effect may be an overall enhanced growth effect of the organism(s) as a whole, or it may be a selective enhanced growth effect, that relates only to enhancement of one or more selected growth effects of the organism(s). For example, and without limitation, the enhancement may selectively relate predominately or exclusively to the growth of the respective stem, leaves or fruits of one or more plants.

In the following, preferred embodiments of the modulating system are described, which can be arbitrarily combined with each other or with other aspects of the present invention, unless such combination is explicitly excluded or technically impossible.

According to some embodiments, wherein the light modulating material comprises at least one luminescent, preferably photoluminescent, material. In particular, the luminescent material may comprise or consist of at least one phosphor. Specifically, such phosphor may be selected from the following group of materials: AL₂O₃Cr³⁺ (ruby), Mg₂TiO₄:Mn⁴⁺(MTO), Y₂MgTiO₆:Mn⁴⁺ (YMT), Ca₃Al₄ZnO₁₀ (CAZO).

The term "phosphor", as used herein, refers to a fluorescent or a phosphorescent inorganic material which contains one or more light emitting centers. The light emitting centers are formed by activator elements such as e.g. atoms or ions of rare earth metal elements, for example La, Ce, Pr, Nd, Pm, Sm, Eu, Gd, Tb, Dy, Ho, Er, Tm, Yb and Lu, and/or atoms or ions of transition metal elements, for example Cr, Mn, Fe, Co, Ni, Cu, Ag, Au and Zn, and/or atoms or ions of main group metal elements, for example Na, Tl, Sn, Pb, Sb and Bi. Examples of suitable phosphors include phosphors based on garnet, silicate, orthosilicate, thiogallate, sulfide, nitride, silicon-based oxynitride, nitridosilicate, nitridoaluminumsilicate, oxonitridosilicate, oxonitridoaluminumsilicate and rare earth doped sialon. Phosphors within the meaning of the present application are materials which absorb electromagnetic radiation of a specific wavelength range, preferably blue and/or ultraviolet (UV) electromagnetic radiation and convert the absorbed electromagnetic radiation into electromagnetic radiation having a different wavelength or even wavelength range, preferably visible (VIS) light such as violet, blue, green, yellow, orange, or red light, or the near infrared light (NIR). Examples of light modulating materials, including particularly examples of phosphors, are provided in particular in each of PCT/EP2018/07008 and PCT/EP2018/06999, each of which is incorporated herein in its entirety by way of reference.

The term "luminescence", as used herein, refers collectively to fluorescence and phosphorescence. Accordingly, "luminescent" refers collectively to "fluorescent" and "phosphorescent". The terms "fluorescence" or "fluorescent", as used herein, refer to a spin allowed light emission from a singlet state of spin multiplicity (2S+1) =1. The terms "phosphorescence" or "phosphorescent", as used herein, refer to a spin prohibition light emission from a triplet state or higher spin state (e.g. quintet) of spin multiplicity (2S+1) ≥ 3, wherein S is the total spin angular momentum (sum of all the electron spins).

According to some further embodiments the light modulating material may comprise one or more polymers, preferably one or more organic polymers. By way of example and without limitation, such one or more organic polymers may be selected from the following group of materials: polyethylene (PE), polypropylene (PP), polyvinylchloride (PVC), polystyrol (PS), polytetrafluorethylene (PTFE), poly(methyl methacrylate) (PMMA), polyacrylnitril (PAN), polyacrylamid (PAA), polyamide (PA), aramide (polyaramide), (PPTA, Kevlar®, Twaron®), poly(m-phenylen terephthalamid) (PMPI, Nomex®, Teijinconex®), polyketons like polyetherketon (PEK), polyethylene terephthalate (PET, PETE), polycarbonate (PC), polyethylenglycol (PEG), polyurethane (PU), Kapton K and Kapton HN is poly (4,4'-oxydiphenylene-pyromellitimide), poly(organo)siloxane, and melamine-resin (MF).

Specifically, according to some embodiments, the light modulating material may comprise a matrix material and one or more of or a combination, e.g. a mix, of two or more of the following:
a) a composition comprising at least one phosphor, wherein the phosphor has a peak emission light wavelength in the range of less than 500 nm or more than 600 nm;
b) a composition comprising at least one phosphor having a peak wavelength of light emitted from the phosphor in the range of 650 nm or more, preferably in the range from 650 to 1500 nm, more preferably in the range from 650 to 1000 nm, even more preferably in the range from 650 to 800 nm, furthermore preferably in the range from 650 to 750 nm, much more preferably it is from 660 nm to 730 nm, most preferably from 670 nm to 710nm;
c) at least one phosphor having a peak wavelength of light emitted from the phosphor in the range of 500 nm or less, preferably in the range from 250 nm to 500 nm, more preferably in the range from 300 nm to 500 nm, even more preferably in the range from 350 nm to 500 nm, furthermore preferably in the range from 400 nm to 500nm, much more preferably in the range from 420 nm to 480 nm, most preferably in the rage from 430 nm to 460 n;
d) at least one phosphor having a first peak wavelength of light emitted from the phosphor in the range of 500nm or less, and a second peak wavelength of light emitted from the phosphor in the range of 650 nm or more, preferably the first peak wavelength of light emitted from the phosphor is in the range from 250nm to 500nm, and the second peak light emission wavelength is in the range from 650 nm to 1500 nm, more preferably the first peak wavelength of light emitted from the phosphor is in the range from 300nm to 500nm, and the second peak light emission wavelength is in the range from 650 nm to 1000 nm, even more preferably the first peak wavelength of light emitted from the phosphor is in the range from 350nm to 500nm, and the second peak light emission wavelength is in the range from 650 nm to 800 nm, furthermore preferably the first peak wavelength of light emitted from the phosphor is in the range from 400nm to 500nm, and the second peak light emission wavelength is in the range from 650 nm to 750 nm, much more preferably the first peak wavelength of light emitted from the phosphor is in the range from 420 nm to 480 nm, and the second peak light emission wavelength is in the range from 660 nm to 740 nm, most preferably the first peak wavelength of light emitted from the phosphor is in the rage from 430 nm to 460 nm and the second peak wavelength of light emitted from the phosphor is in the range from 660 nm to 710 nm.

The term "peak wavelength", as used herein, refers to a wavelength at which a peak occurs in an emission or absorption spectrum. Specifically, the term may relate to a main peak having the maximum intensity and absorption, respectively, within the spectrum and/or one or more side peaks, each having lower intensity value and absorption value, respectively, than the main peak.

In some embodiments, the light modulation arrangement is configured, e.g. by way of a respective configuration of at least one of the one or more light modulation devices and its corresponding one or more light modulating materials, to selectively modulate the intensity of at least one spectral component of the light to be applied to the organism.

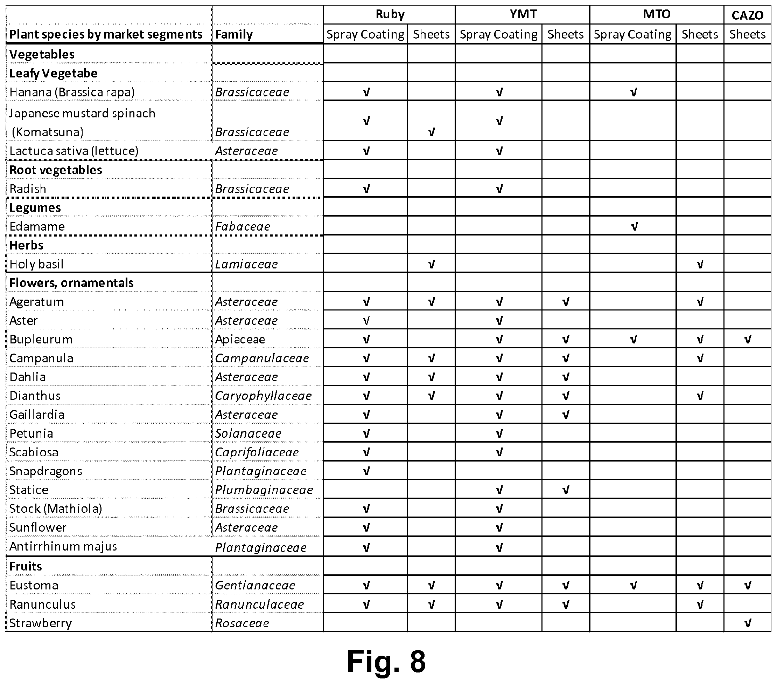

Light modulating systems using any one or more of these light modulating materials are particularly effective for furthering growth of a large variety of different organisms, in particular including a broad range of plants, such as vegetables, herbs and flowers. Specific examples of plants and suitable light modulating materials for enhancing their growth, globally or selectively for certain growth aspects, will be discussed below in connection with Figure 8.

According to some embodiments, the light modulation arrangement comprises a reconfigurable light modulation device comprising: (i) a container, e.g. an at least partially light-transparent pipe or a connected plurality of such pipes, configured to receive a filling with a composition comprising at least one light modulating material, the container being configured to reflect, redirect, and/or pass incoming light from one or more light sources and to modulate said incoming light by means of said composition such that the outgoing reflected, redirected, and/or passed light to be applied to said organism is modulated accordingly; and (ii) a composition source for supplying one or more different compositions to the container, wherein the light modulation device is reconfigurable in that the composition source is adapted to (ii-1) modify at least one of the supplied one or more compositions with respect to at least one parameter of it that affects the light modulation effect of the composition, or (ii-2) selectively supply one or more of the different compositions in accordance with a respective configuration.

In some variants, the light modulation device may specifically comprise a plurality of such containers and accordingly, the light modulation device may be reconfigurable in that the composition source is adapted to supply, in accordance with a respective configuration of the light modulating device, a first one of the different compositions to a first one of the containers and a second, different one of the compositions to a different one of the containers (may be extended similarly for further containers and related compositions) such that the configuration defines a specific combination of different compositions being simultaneously applied to modulate incoming light.

The parameter, referred to above, may particularly relate to a kind or a concentration of the light modulating material in the composition, a temperature or a pressure of the composition. The composition source may particularly be adapted to supply the composition in the form of a fluid, such as a liquid, gas, foam, powder or dust, or in the form any other manifestation of material that allows for selectively modifying said at least one parameter of the composition. These embodiments have the advantage that transitioning the light modulation arrangement between its different configurations may be easily affected with a high flexibility, precision, fine granularity and transitioning speed by simply controlling the composition source to modify said at least one parameter of the composition, e.g. the kind and/or concentration of the light modulating material or a mix-ratio of multiple light modulating materials within the composition.

According to some related embodiments, at least a portion of the container is a predominantly two-dimensional structure, such as a plate, comprising at least one hollow chamber for receiving said one or more compositions. The term "predominantly two-dimensional structure", as used herein, relates to a three-dimensional body the extension of which along each of two of its dimensions is greater, at least by a factor of two, than its extension along the third dimension. Without limitation, (i) a "plate", i.e. a thin (the extension of the plate in a first and a second dimensions together defining its plane is at least two times its maximum thickness (third dimension)) and at least substantially flat piece of material, or (ii) a hollow cylinder having a wall with a maximum thickness being smaller by more than a factor two than both the circumference (first dimension) and the distance between the top and bottom planes of the cylinder (second dimension), are each predominantly two-dimensional structures in the sense of the present invention. Nevertheless, such a structure may have variations in thickness or surface irregularities (e.g. a curvature, roughness, or wavelike form) with respect to its third spatial extension that are substantially smaller in size than the structure's extension along each of its main first and second spatial dimensions. These embodiments may particularly be advantageously used to construct greenhouses or animal housings or compartments, wherein the plates serve both as constructive and as light modulating elements of such structures.

Specifically, said container may be further configured as a cover, a roof (e.g. a corrugated roof or a roof tile), a wall or a floor, or an element for building one of the foregoing, of a host compartment for hosting said organism or plurality of organisms (such as a greenhouse, a planter or a stable). In some variants, the container may be made of a material comprising or consisting of polycarbonate, which is a particularly robust, low weight and light transparent material and thus a preferable material for building the container or parts thereof.

According to some related embodiments, the plate-formed portion of the container comprises two or more separate, unconnected hollow chambers, each forming a channel for one or more of the at least one composition. Thus, it is possible to achieve different configurations of the light modulation arrangement simply by selectively assigning and providing different compositions, each to a respective subset of one or more channels from the set of all channels, each composition comprising a respective light modulating material or specific concentration thereof, and varying the selection of these compositions. Accordingly, reconfiguring such a system may be achieved by merely controlling the flow of the compositions through the respective channels, e.g. by way of controlled valves, switches or pumps. For example, in the case of three channels ch1, ch2, ch3, a first configuration might relate to providing a composition A to channel ch1 and a different composition B to channel ch2, while a second, different configuration might relate to providing composition A to channel ch1 and a composition C to channel ch3. If, according to some variants, each composition is assigned strictly to a specific subset (i.e. one or more but not all) of the channels, this may provide the advantage of avoiding unintended mixing of different compositions when transitioning the light modulation arrangement between configurations. However, in other variants, the number of channels may be different from the number of different compositions used and thus a channel may be used for different compositions at different times.

According to further related embodiments, the composition source comprises two or more tanks, e.g. replaceable cartridges, for storage of a respective number of different compositions. Furthermore, the composition source is further configured to perform said modification of the supplied composition by way of either selectively supplying a composition from a different tank than before or by selectively mixing the respective compositions of at least two of the tanks and supplying, e.g. pumping, the resulting mix of different compositions to the container. In addition to the selection of the compositions to be mixed, the selective mixing may be determined in addition by other mixing parameters, such as a ratio (e.g. volume ratio or mass ratio) or a respective concentration, e.g. of light modulating material, within the compositions being mixed.

According to further embodiments, the light modulation arrangement comprises at least one reconfigurable light modulation device comprising a surface configured to reflect, re-direct and/or selectively pass light and thereby modulate it by means of the light modulating material, wherein the light modulation device is reconfigurable in that the light modulation arrangement as a whole or the light modulation device individually is capable of translating and/or rotating at least a portion of the surface. In this way, in addition to being modulated, the incoming light may be effectively directed towards the organisms to be exposed to the light. In particular, this is also possible in a time variant manner, e.g. if the light source is sun light and thus the direction of the incoming light varies during the day.

Specifically, according to a related embodiment, said surface may be at least partially covered by a coating comprising said light modulating material. This has the advantage that existing, non-light modulating structures, such as roofs or walls of greenhouses or windows of stables etc. may be retroactively turned into light modulating devices simply by way of application of such a coating.

According to some further related embodiments, said at least one reconfigurable light modulation device comprises a translatable and/or rotatable shading element comprising said surface. This allows for a simultaneous and adjustable combination of a shading effect and a light modulating effect. Specifically, in some variants, the shading element may comprise a curtain or sun-blind/jalousie, an may be partially transparent and/or may reflect.

According to some yet further related embodiments, said at least one reconfigurable light modulation device comprises one of or a combination of at least two of a card, a foil, a fabric, and a net forming at least a portion of said surface. This allows for low cost and highly variable light modulation arrangements. For example and without limitation, the card, foil, fabric or net or said combination may be formed as a tunnel or dome, or a part thereof, to be positioned, above the one or more organisms to be exposed to the incoming light, such that the incoming light needs to pass through or be reflected or otherwise redirected by the tunnel or dome, respectively, in order to reach the organism(s). Particularly, when the one or more organisms are positioned below the tunnel or dome, an efficient (esp. cost and space efficient) dual-use application is possible, where the tunnel or dome provides both shelter, e.g. from wind or rain, and the light modulating effect to the organism(s).

According to some embodiments, at least a part of at least one of the at least one light modulating devices is made from a polymer, preferably from an organic polymer. Specifically, the polymer may be selected from the group consisting of: polyethylene (PE), polypropylene (PP), polyvinylchloride (PVC), polystyrol (PS), polytetrafluorethylene (PTFE), poly(methyl methacrylate) (PMMA), polyacrylnitril (PAN), polyacrylamid (PAA), polyamide (PA), aramide (polyaramide), (PPTA, Kevlar®, Twaron®), poly(m-phenylen terephthalamid) (PMPI, Nomex®, Teijinconex®), polyketons like polyetherketon (PEK), polyethylene terephthalate (PET, PETE), polycarbonate (PC), polyethylenglycol (PEG), polyurethane (PU), Kapton K and Kapton HN is poly (4,4'-oxydiphenylene-pyromellitimide), poly(organo)siloxane, and melamine-resin (MF).

According to some further embodiments, the light modulation arrangement comprises at least one reconfigurable light modulation device comprising an applicator for applying a fluid composition containing said light modulating material to one or more of said organisms, wherein the light modulation device is reconfigurable in that at least one operating parameter of the applicator that has an effect on at least one of or a combination of at least two of a timing, an amount, a duration, a concentration of light modulating material, and a way of application of the fluid composition is modifiable. Particularly, these embodiments allow for a direct application of the composition containing said light modulating material to said organism(s) which may be used to increase the desired growth-related effect of the light modulation. Furthermore, by only selectively applying the composition to certain portions of the organism(s) or by selectively changing the operating parameter(s) in accordance with a desired growth effect, a targeted controlling of the growth process of the organism(s) or selected parts thereof or of their fruits or of their offspring may be achieved.

According to some further embodiments, the light modulation arrangement is adapted to be automatically reconfigurable in response and according to received control information to cause the light modulation arrangement to transition to a configuration defined by the control information. For example, the light modulation arrangement may comprise a respective control module with a man-machine-interface, MMI, to allow a user to select or otherwise define a desired configuration of the light modulation arrangement to generate control information, which is then automatically executed by way of automatic reconfiguration of the light modulation arrangement in accordance with the control information. Instead, or in addition, the control information may be generated by a sensor arrangement. For example, the sensor arrangement might be adapted to detect the direction of the incoming light and generate control information to control a reconfiguration of the light modulation arrangement such as to align it to the detected current direction of the incoming light, e.g. sun light, in order to ensure a continuous optimal exposure of the organism(s) to the modulated light. In a yet further variant, which may be used instead or in addition, the control information is received from an external information source, e.g. a server in the internet or another remote controller entity. For example, the control information might be generated remotely, e.g. centrally for a plurality of different light modulation arrangements, based on a weather forecast and then communicated over a data link, e.g. over the internet, to the various light modulation arrangements.

According to some further embodiments, the modulating system further comprises an artificial light source comprising said light modulating material in such a way that at least a portion of the artificial light emitted from the artificial light source is modulated by the modulating material. This allows for yet another efficient dual-use implementation, because the generation and the modulation of the light may thus be achieved by a same device, i.e. light source. Specifically, according to some variants, the light modulating material may be present in a respective light filter applied to the artificial light, in the material of a light emitting diode (LED) or organic LED (OLED), as a coating of a light bulb bearing the light modulating material in a coating, or in a bulb material of such light bulb.

According to some related embodiments, said artificial light source comprises at least one of or a combination of at least two of: a LED, e.g. an OLED, an incandescent light bulb lamp, a halogen lamp, a fluorescent lamp, a metal halide lamp, a sulfur lamp, a sodium lamp, a neon lamp, an electrodeless lamp. Preferably, at least one of the LEDs and/or lamps of the artificial light source comprises or is coated with said light modulating material.

According to some further embodiments, the modulating system further comprises a sensor system configured to measure at least one environmental condition to which the organism is exposed and to output sensor data representing one or more respective measurement results. Specifically, according to some variants, the sensor data may be output on a man-machine-interface, e.g. on a screen, to inform a user and thus enable an informed decision regarding the configuration of the light modulation arrangement. Instead or in addition, the system may be configured to output sensor data by communicating same to a local or a remote processing platform for further processing, e.g. for analytic purposes, or for providing in return said control information, as discussed above, defining a desired (re-)configuration of the light modulating arrangement.

According to some related embodiments, the measurement results represented by the sensor data relate to at least one of or a combination of at least two of the following environmental conditions to which the organism is exposed: a temperature, an intensity or a spectrum of an electromagnetic radiation (e.g. light in the UV, VIS or NIR part of the spectrum), or a shift of such spectrum relative to a preceding reference point in time or timeframe, humidity, moisture of soil, available nutrition in the soil, air pressure, sound, a concentration of carbon dioxide and/or oxygen, wind or other air flows, electrical and/or magnetic fields, Gravitational field, chemical composition of the environment and/or soil, pH level of soil, soil reflectivity, topography of environment. Specifically, the chemical composition of the environment and/or soil may relate to one or more of: toxins, nutrients, pheromones, metabolic indicators such as glucose and oxygen levels, internal signal molecules (such as hormones), neurotransmitters and cytokines. In principle, each of the factors listed above may have an effect on the development, such as growth, of organisms, their fruits and/or offspring and thus measurement thereof may provide valuable guidance for operating the modulating system accordingly.

According to some further related embodiments, the sensor data further represents at least one of or a combination of at least two of the following quantities relating to a state, preferably a growth state, of said organism and to output the corresponding measurement results as part of the sensor data: growth rate of the organism as a whole or one or more specific parts thereof, an amount of organic matter, biological activity, biomass, morphology, color of organism or one or more specific parts thereof, diseases, kind and/or level of present pathogens, and/or, if the quantity to be measured relates specifically to one or more plants: plant size, leaf size, stem size, size or ripening state or other appearance or property of at least one fruit, a level of performed photosynthesis, motion of one or more plant parts, weed occurrence, salinity, leaf area, count, color and/or size, leaf color, N-Index. Accordingly, the modulation system according to these embodiments allows for a direct measurement of the results of the exposure of the organism(s) to the modulated light, and thus a necessary input for building a regulation loop. Accordingly, for implementing such a regulation loop, the configuration of the modulation system, i.e. specifically of its light modulation arrangement, is defined in dependence on the sensor data, i.e. the state of the organism(s) or their fruit or offspring resulting from the treatment with light modulated light up to the time of measurement.

According to some yet further related embodiments, the sensor data further represents a location, such as a geolocation, related to the measurement. For example and without limitation, such location may relate to a location of said sensor system or a particular sensor thereof, of said modulation system as a whole, its light modulation arrangement or of one or more of its individual light modulating devices, or of the organism(s) being subject to the measurement. Tagging the sensor data with location information in this way has the advantage that, for example, data maps can be created, where the measurements results are presented as function of the respective location (e.g. geolocation, such as GPS coordinates and similar). This in turn allows for improved levels of analysis of the data in dependence on location and consequently an improved planning and control of the configuration of a plurality of modulation systems in dependence on their respective location, yielding improved results for the development of the respective organism(s) treated by these modulation systems.

According to some further embodiments, the modulation system further comprises a mounting system for mounting at least one of said light modulation arrangement and/or a sensor system for providing the sensor data, or one or more portions of any of the foregoing, to one or more support structures, e.g. to one or more poles or to an irrigation system, or an agricultural machine or vehicle. These embodiments thus enable a fixed or movable and thus flexible positioning of the modulation system or respective parts thereof.

According to some further embodiments, the modulation system further comprises a man-machine-interface configured to perform one or more of the following functions: (i) receive user inputs, preferably including scenario data defining a respective kind of the organism and/or at least one to-be-optimized growth effect of said organism or parts thereof; (ii) output control information requesting a user to initiate a transition process for transitioning the light modulation arrangement to the configuration defined by the control information; (iii) initiate a communication over a communication link to a remote communication device, e.g. a customer support center, or a data server. Specifically, the user input may also relate to control input provided by the user to reconfigure the modulation system, e.g. its light modulation arrangement or the kind of measurements to be made by the sensor system. Furthermore, the user input might relate to purchasing information to define and request a purchasing or other transaction with the purpose of receiving products or services related to the modulation system from a provider of such products or services, e.g. a supplier of said compositions or structures containing a light modulating material, or of spare parts for the system. The control information might further comprise measurement results of the sensor system.

According to some related embodiments, the man-machine-interface is configured to output the control information, at least in parts, in the form of augmented reality (AR) information to support a human user to correctly initiate a non-automatic configuration of the light modulation arrangement. This helps to avoid a maloperation or suboptimal operation of the modulation system due to wrong user inputs or a lack of or suboptimal performance of other requested actions to be performed by the user according to the output control information.

A second aspect of the present invention is directed to a method of determining a configuration of the modulating system of the first aspect for modulating light to which an organism (or multiple organisms), preferably a plant, is to be exposed. The method comprises: (i) receiving input information comprising data, which may particularly be sensor data, which data represents at least one environmental condition to which the organism is currently, was previously, or is to be exposed; (ii) processing the input information to derive therefrom control information defining an optimized configuration of the light modulation arrangement of said modulation system in dependence on scenario data defining a respective kind of the organism and/or at least one to-be-optimized growth effect of said organism; and (iii) outputting the control information to initiate or request a transition process for transitioning the light modulation arrangement to the configuration defined by the control information. The scenario data defining a kind of the organism and/or the at least one to-be-optimized growth effect of said organism (together referred to as "scenario") may particularly be provided by another system or by a user as another input to the method.

The method of the second aspect thus has the advantage that control information may be generated in an automated way to trigger a transitioning of the light modulation arrangement to a configuration defined by the control information. The control information, in turn, is generated in dependence on both the at least one environmental condition which the at least one organism is or was exposed to and the scenario data indicating the kind of organism(s) and/or the desired and to-be-optimized growth effect. Accordingly, the control information, and thus the actual selection of a corresponding configuration of the light modulation arrangement can be specifically adapted to both the particular situation to which the selected organism(s) is or was exposed and the desired objective.

Specifically, in some embodiments, the sensor data may be generated and output by the modulating system itself (which then has itself a respective sensor system) while in other variants it is generated and provided using a sensor system being external to the modulation system itself. According to some embodiments, the scenario data may be represented by the input information. Deriving the control information may, in some embodiments, specifically relate to selecting a particular configuration of the light modulation arrangement of said modulation system from a predefined set of multiple available configurations.

According to some further embodiments, the received scenario data represents at least one of or a combination of at least two of the following to-be-optimized growth effects of said organism: organism growth rate or resulting size, vegetative growth, reproductive growth, switch between different growth states (such as vegetative to reproductive), harmonized plant growth among a plurality of said organisms, fruit development, morphology, activate and de-activating genes. Specifically, if the organism is one or more plants, the above list further comprises: root growth, seedling development and establishment, secondary metabolites, weed growth, and pest resistance.

According to some further embodiments, the data representing at least one environmental condition comprises data representing at least one specific property of a spectrum of incoming light to which the light modulation arrangement is to be exposed to generate the modulated light to which the organism is to be exposed. In this way, the determination of an optimal configuration of the light modulation arrangement may be based on the specific properties of the incoming light, such that an optimal interplay between the incoming light and the light modulation arrangement may be selected in view of the desired properties of the outgoing light and thus the desired effect on the growth of the organism to be exposed thereto. This may be used both if direct or indirect sunlight is used as incoming light and if one or more artificial light sources are used instead or in addition.

According to some further embodiments, processing the input information to derive therefrom the control information comprises defining the control information as a function of time and outputting the control information comprises outputting said control information as a function of time. This is particularly useful, if the input information is time-variant, e.g. if it comprises time-variant data representing said at least one environmental condition or said at least one specific property of a spectrum of incoming light to which the light modulation arrangement is to be exposed to generate the modulated light to which the organism is to be exposed. Specifically, if sunlight is used as incoming light, there is obviously a natural time-dependence of its availability, direction of arrival and even spectrum, the latter esp. due to a number of effects (e.g. filtering and scattering) of the earth's atmosphere on the spectrum which vary during the day. Accordingly, an optimal use of the light modulating arrangement in view of the desired one or more growth effects may involve reconfiguring the light modulation arrangement one or more times during the day as a function of time.

According to some further embodiments, the method further comprises applying machine learning to self-adapt over time its capability of processing received input information to derive therefrom corresponding control information. This allows for an automation of the adaption process which may particularly also provide advantages in terms of speed for the generation of the control information and the actual reconfiguration of the light modulation arrangement based thereon, e.g. real-time capability. Furthermore, applying machine learning for the particular purpose of deriving the control information may lead to a higher optimization quality of this control information in the sense of a better approximation of the "ideal" control information, and thus ultimately a better optimization success regarding the desired growth results of the organism(s).

According to some related embodiments, the method further comprises using current and/or previously received input information including respective sensor data representing one or more respective current or historical measurement results for at least one or a combination of at least two to-be-optimized growth effects of said organism as feedback input for the machine learning process. This process may be considered a form of (iterative) supervised learning and may be used to achieve a faster adaptation rate and a higher optimization level resulting from such adaptation for the desired growth effects. In some variants, also related previously-determined control information is included in the feedback input. According to some further related embodiments, the method further comprises storing the received input information and/or the control information derived therefrom into a database for later retrieval and/or use as historical information.

According to some further related embodiments, the applied machine learning involves one or more of or a combination of at least two of the following: an artificial neural network, a genetic algorithm, a fuzzy logic controller, an algorithm based on Grey relational analysis. These specific choices represent a selection of particularly suitable methods for optimizing the determination of an optimal configuration of the light modulation arrangement for a particular scenario.

According to some embodiments, the method further comprises outputting application data representing at least one of or a combination of at least two of the following: (i) a degree, a duration, an amount, or a kind of the processing having occurred in relation to one or more specified modulation systems according to the first aspect of the present invention; (ii) at least one characteristic of the related input information for such processing. In particular, this allows to determine a value of an indicator of use representing the actually occurred processing. The determined value of this indicator in turn may particularly serve as a factor for determining a payment or other consideration due related to the occurred processing, which thus enables pay-per-use payment models, e.g. if the modulating system or parts thereof are to be provided on a lease basis or related maintenance services are to be provided on a per-use basis.

A third aspect of the present invention is directed to a computer program being configured to perform the method of the second aspect. Specifically, the computer program may be configured to perform the method of any one or more embodiments of the second aspect, as described herein.

The computer program may particularly be provided as a computer program product in the form of a non-transient data medium on which the one or more programs for performing the method are stored. Preferably, this is a data carrier, such as an optical data carrier (e.g. CD, DVD etc.) or a flash memory module. This can be particularly advantageous if the computer program product is tradeable as such or can be used by the user of the memory controller or memory system itself for programming same. In another implementation, the computer program product is provided as a file on a data processing unit, in particular on a server, and can be downloaded via a data connection, e.g. the Internet or a dedicated data connection, such as a proprietary or local area network.

A fourth aspect of the present invention is directed to a processing platform configured to perform the method of the second aspect. Specifically, the processing platform may be configured to perform the method of any one or more embodiments of the second aspect, as described herein. Specifically, in some variants, the above configuration of the processing platform may be implemented, at least in parts, by means of a computer program according to the third aspect. The processing platform may particularly be implemented as a central computing platform, such as a server, which serves multiple light modulating systems at different locations, e.g. at different farms. To the contrary, it may also be implemented as a local or mobile computing platform, e.g. a smart phone or other local (or mobile computer, that specifically serves one or more specific light modulating systems or overall systems for controlling a light-dependent condition of an organism (cf. fifth aspect described below), respectively, at a given location, e.g. at a specific farm.

A fifth aspect of the present invention is directed to a system for controlling a light-dependent condition of an organism (or multiple organisms), preferably of a plant. The system comprises a modulating system of the first aspect and a processing platform of the fourth aspect. The modulating system is configured to output said input information, and the processing platform is configured to perform the method of the second aspect to receive and process said input information and to output the resulting control information. The modulating system is further configured to receive said resulting control information to (i) initiate automatically or (ii) request a user, e.g. via a man-machine-interface, such as a display, voice generator, or other signal generator, to initiate a transition process for transitioning the light modulation arrangement to the configuration defined by the control information.

Moreover, a sixth aspect of the present invention is directed to a use of the modulating system of the first aspect, the method of the second aspect, the computer program of the third aspect, the processing platform of the fourth aspect, or the system of the fifth aspect for one or more of the following: agriculture, cultivation of algae, bacteria, preferably photosynthetic bacteria, planktons, preferably photo planktons. Unless explicitly stated otherwise, a reference to a specific aspect of the present invention is also applicable to any related embodiment of that aspect, such as, in particular, one or more of the specific related embodiments described herein.

Accordingly, the advantages described above with respect to the first and second aspects similarly apply to the further aspects of the present invention referring thereto.

### BRIEF DESCRIPTION OF THE DRAWINGS

Further advantages, features and applications of the present invention are provided in the following detailed description and the appended figures, wherein:

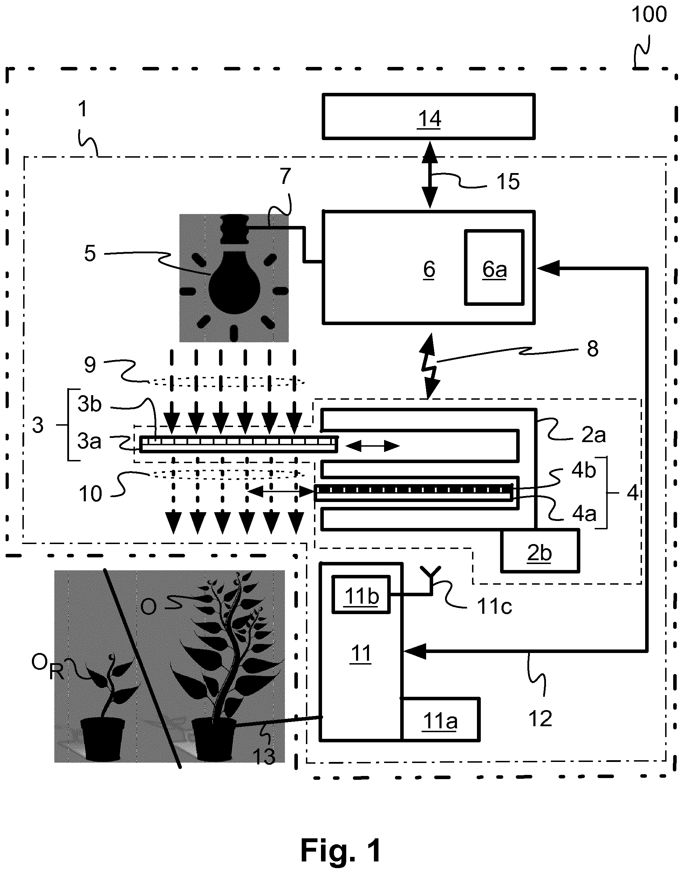

**Fig. 1** schematically illustrates an exemplary system for controlling the light-dependent condition of an organism according to a first exemplary embodiment of the present invention, the system comprising a modulating system having two sheets, each coated with a different light-modulating material, wherein the sheets can be selectively applied to light to which an organism is exposed;

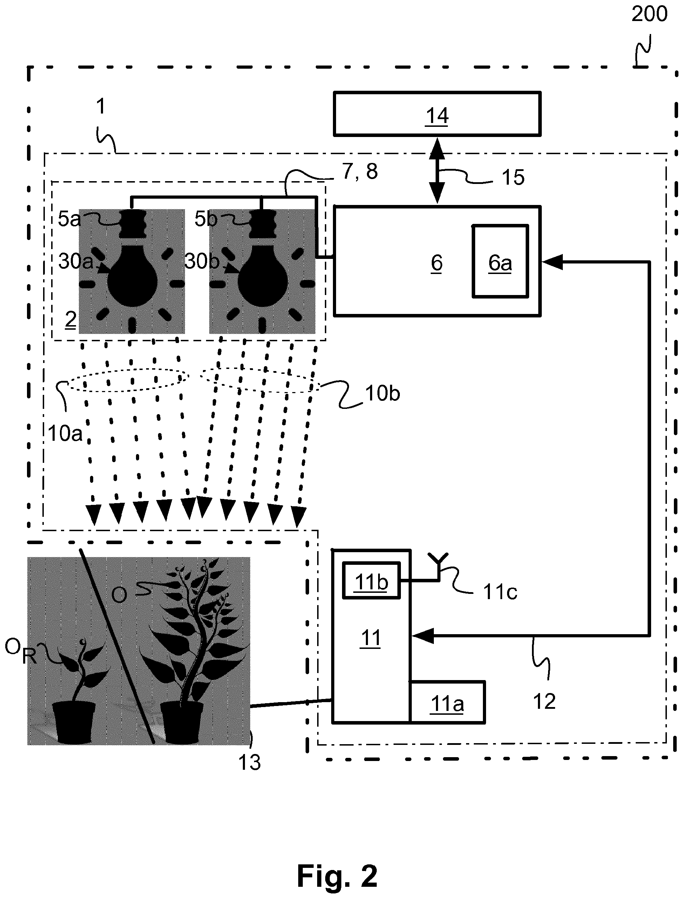

**Fig. 2** schematically illustrates another exemplary system for controlling the light-dependent condition of an organism according to a second exemplary embodiment of the present invention, the system comprising a modulating system wherein two artificial light sources are selectively used to emit light to which an organism is exposed and each of the light sources has a coating made of a respective different light modulating material;

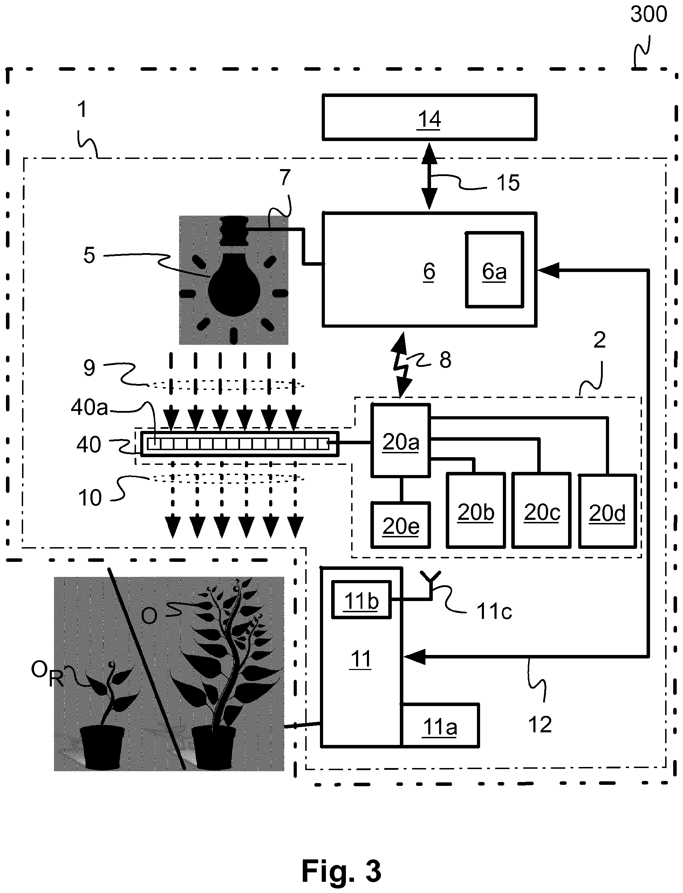

**Fig. 3** schematically illustrates yet another exemplary system for controlling the light-dependent condition of an organism according to a third exemplary embodiment of the present invention, the system comprising a modulating system wherein different fluids, each comprising a different light modulating material and being provided to a hollow chamber of a light-transparent container, are selectively applied to light to which an organism is exposed;

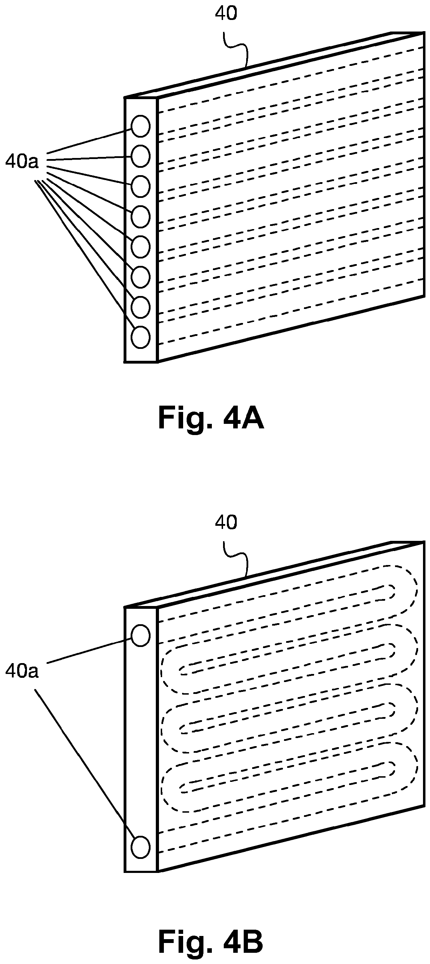

**Fig. 4** schematically illustrates various different exemplary variants of a container forming part of the modulating system according to the embodiment of Fig. 3;

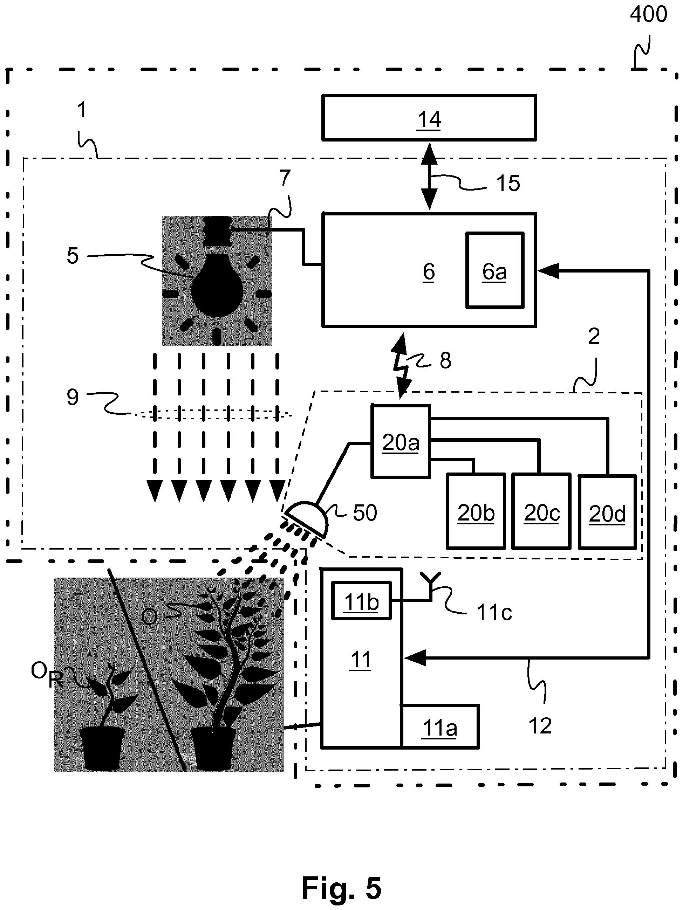

**Fig. 5** schematically illustrates yet another exemplary system for controlling the light-dependent condition of an organism according to a fourth exemplary embodiment of the present invention, the system comprising a modulating system wherein different fluids, each comprising a different light modulating material, are selectively applied to the surface of an organism;

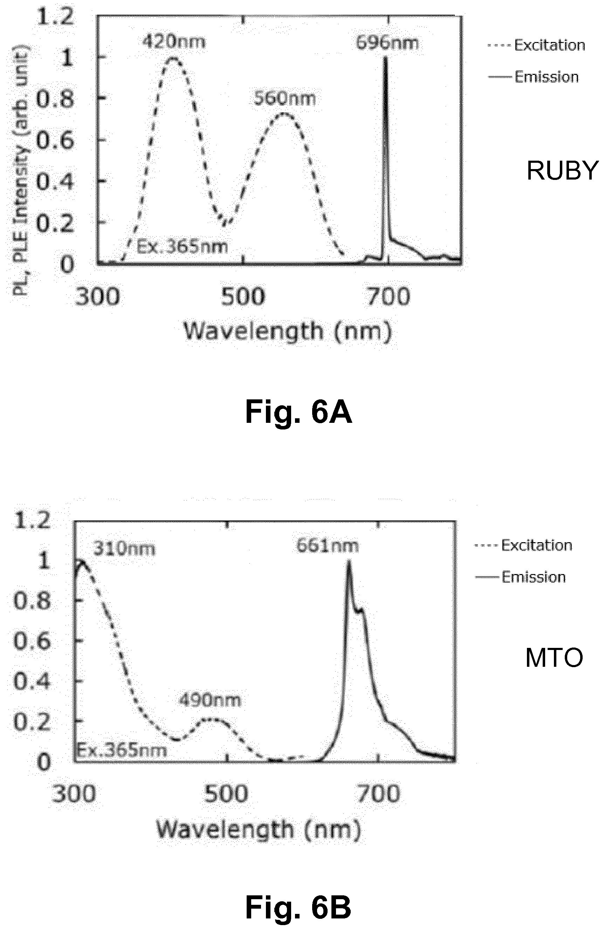

**Figs. 6A-6D** schematically illustrate different spectra of ingoing and outgoing light for four exemplary light-modulating phosphors, which may be used as light modulating materials according to preferred embodiments of the present invention;

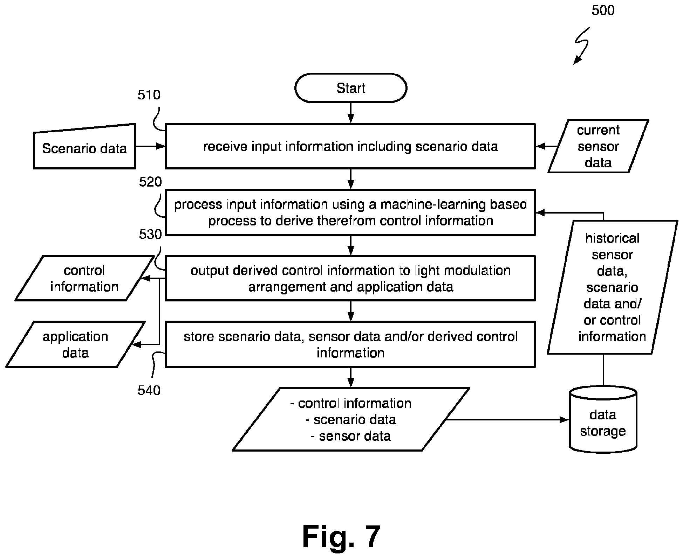

**Fig. 7** shows a flow chart illustrating an exemplary method of determining a configuration of a modulating system according to the present invention, for example and without limitation of a modulating system of any one of the embodiments illustrated in Figures 1 to 5;
**Fig. 8** shows a table illustrating preferred combinations of selected types of organisms, which may be treated with the system for controlling the light-dependent condition of an organism of the present invention for the purpose of achieving one or more enhanced growth effects, with preferred light modulating materials to be used for the treatment of such respective organisms; and

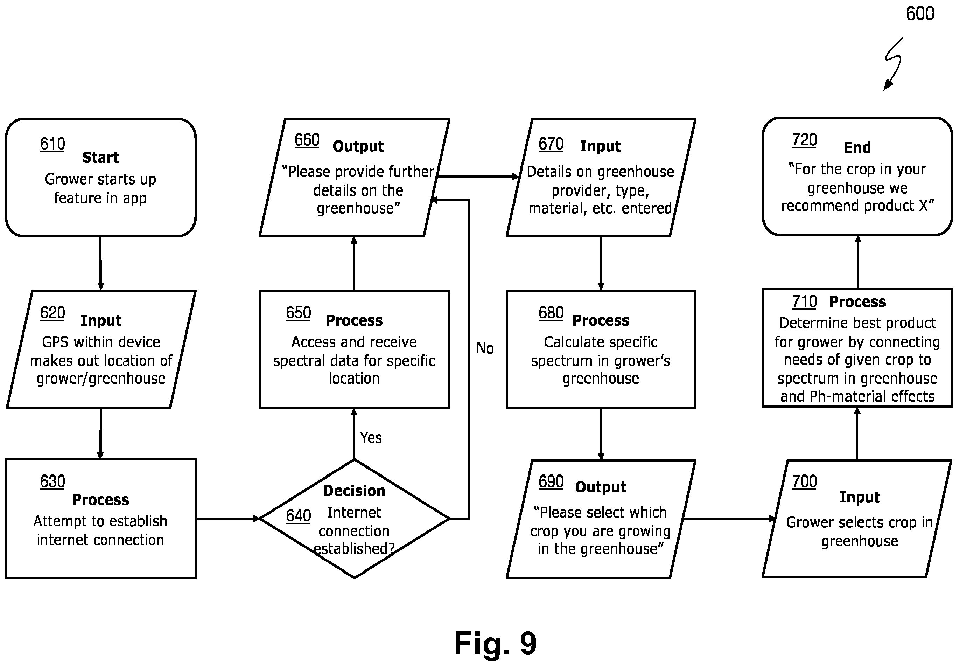

**Fig. 9** shows a flow chart illustrating an exemplary method of determining a suitable light modulating material to be used in a light modulating system according to the present invention, e.g. according to any one of Figs. 1 to 5.

In the figures, identical reference signs are used for the same or mutually corresponding elements of the systems described herein.

### DETAILED DESCRIPTION OF EMBODIMENTS

Referring to **Fig. 1**, an exemplary system 100 for controlling the light dependent condition of an organism O, such as a plant, comprises a modulating system 1 and a processing platform 14, which may for example be a computing platform, even a distributed computing platform, that is external from the modulating system 1 and connected thereto by a communication link 15, such as - without limitation - the Internet. The function of the processing platform 14 will be described below in detail in connection with Figs. 7 and 9.

The modulating system 1 comprises a light modulation arrangement 2 comprising (exemplarily and without limitation) two light modulation devices 3 and 4. Each of these light modulation devices 3 and 4 is adapted to modulate light by means of a respective light modulating material, e.g. a suitable phosphor. This light modulating material is provided as a respective light modulating surface in the form of a coating 3b or 4b, respectively, being provided on a respective light-transparent carrier sheet 3a or 3b, respectively. Each of these light modulating devices 3 and 4 is designed such that when incoming light 9 falls on its respective light modulating surface/coating 3a or 3b, respectively, the incoming light 9 is passed through the light modulating device and thereby modulated, including by way of wavelength shifting, resulting in outgoing light 10 having an electromagnetic spectrum being different from that of the incoming light 9. The incoming light may particularly be provided either by an artificial light source 5 forming part of the modulating system 1 or by direct or indirect sunlight, or both together. The optional artificial light source 5, which is controlled by the controller device 6 over a respective communication link 7, may specifically comprise at least one of or a combination of at least two of a LED, e.g. an OLED, an incandescent light bulb lamp, a halogen lamp, a fluorescent lamp, a metal halide lamp, a sulfur lamp, a sodium lamp, a neon lamp, an electrodeless lamp.

The light modulation arrangement 2 is (re)configurable upon receiving a respective configuration signal over a communication link 8, which may particularly be a wireless link, from a controller device 6 also forming part of the modulating system 1. Furthermore, the light modulation arrangement 2 has a housing 2a comprising two slots, each for receiving one of the light modulating devices 3 or 4, respectively. Each of the light modulating devices 3 and 4 is movable in such a translatory way into and out of the respective slot that it can thereby move into or out of, respectively, the light path of the light source 5 directed towards the organism O. Accordingly, the light modulation arrangement 2 is adapted to move each of the light modulating devices 3 and 4, respectively, into or out of the respective slot, depending on the configuration signal it receives from the controller device 6. Particularly, each of the light modulating devices may be selectively moved into or out of its slot or both together may be moved in or out. Thus, the achievable configurations comprise: (a) modulating device 3 in, modulating device 4 out; (b) modulating device 3 out, modulating device 3 in; (c) both modulating devices 3, 4 in; and (d) both modulating devices 3, 4 out.

The light modulation arrangement 2 is spatially arranged relative to the light source 5 and the organism O such that when the respective light modulating device 3 or 4 moves out of its respective slot, it is moved into the light path from the light source 5 towards the organism O such that the incoming light 9 from the light source 5 falls on the respective modulating device 3 and/or 4 before reaching the organism O as outgoing light 10 after passing through the respective modulating device(s) 3 and/or 4.

The modulating system 1 may further comprise a sensor system 11 configured to measure, e.g. by means of one or more sensor probes 13, at least one environmental condition to which the organism O is exposed, and to output sensor data representing one or more respective measurement results. The sensor system may particularly measure at least one or a combination of at least two of the following environmental conditions to which the organism O is exposed: temperature, intensity or spectrum of electromagnetic radiation or a shift of such spectrum relative to a preceding reference point in time or time frame, humidity, moisture of soil, available nutrition in the soil, air pressure, sound, concentration of carbon dioxide and/or oxygen, wind or other airflows, electrical and/or magnetic fields, gravitational field, chemical composition of environment and/or soil, pH level of soil, soil reflectivity, topography of the environment.

The sensor data may further represent at least one of or a combination of at least two of the following quantities relating to a state, preferably a growth state, of said organism and to output the corresponding measurement results as part of the sensor data: growth rate of the organism as a whole or one or more specific parts thereof, an amount of organic matter, biological activity, biomass, morphology, color of organism or one or more specific parts thereof, diseases, kind and/or level of present pathogens, and/or, if the quantity to be measured relates specifically to one or more plants: plant size, leaf size, stem size, size or ripening state or other appearance or property of at least one fruit, a level of performed photosynthesis, motion of one or more plant parts, weed occurrence, salinity, leaf area, count, color and/or size, leaf color, N-Index.

Furthermore, the sensor system 11 may comprise a location determination function or module 11b, for example for satellite-based location determination using a global location determination system such as GPS, GALILEO, GLONASS etc., and may thus have a corresponding antenna 11c. The sensor system 11 is connected to the controller device 6 by means of a communication link 12, which may particularly be a wireline or a wireless link (e.g. WLAN based), in order to be able to provide sensor data to the controller device 6 and optionally also receive control information, such as control commands, in the opposite direction. The controller device 6 further comprises a man-machine-interface 6a designed such as to allow for communicating information to a human user and to receive user inputs, for example inputs defining the kind of organism, a desired growth effect, location related specifics such as, for example, the geographical orientation of the greenhouse in which the organism is located, or other information. The information communicated by the man-machine-interface 6e to the user may particularly comprise instructions for operating the modulation system 1 or other equipment having an effect on the growth of the organism, such as heating, shading etc.

Optionally, one or more, if not all, of the components of the modulation system 1 or of the modulation system 1 as a whole, may be provided with one or more mounting structures for mounting the respective one or more components or the modulation system 1 as a whole to a support structure, which may particularly be or form a part of an irrigation structure or a vehicle. In this way, the respective component(s) or system may easily be fixed to an exisiting respective support structure and in the case of vehicle may be movable relative to the organism O or plurality of organisms to be treated by means of the modulation system 1, particularly by its light modulation arrangement 2. By way of example, and without limitation, the light modulation arrangement 2 may comprise a support structure 2b, and the sensor system 11 may comprise a respective support structure 11a provided at their respective outer surface.

In order to demonstrate the impact of the light modulation on the growth of organism O, one or more reference organisms O_{R} of the same type as organism O may be treated exactly the same as organism O, however with the exception that O_{R} is not exposed to the modulated light delivered by the light modulation arrangement 2 of the light modulating system 1.

Referring to **Fig. 2**, which shows a system for controlling the light-dependent condition of an organism O according to an exemplary second embodiment 200 of the present invention, the system and its function are similar to that of the system of Fig. 1, however with the exception of the different light modulation arrangement 2, which will now be described in more detail.

According to this embodiment, the light modulation arrangement 2 comprises a plurality of artificial light sources 5 serving as light modulation devices. In the present illustrative example, the light modulation arrangement 2 comprises two artificial light sources 5a and 5b. Each of the two light sources 5a and 5b, each of which may for example be a light-emitting diode (LED) or even a classical incandescent lightbulb, has a respective coating 30a or 30b made of a respective light modulating material such that at least some light emitted from the respective light source 5a or 5b passes through the respective coating 30a or 30b and is thereby modulated. The light modulating materials of the two light sources are different in such a way that even when the light sources themselves are of the same type, the outgoing light 10a of light source 5a differs in its spectral properties from the outgoing light 10b of light source 5b.

The light modulation arrangement 2 is connected to the controller device 6 by means of a communication link 8, which serves at the same time as communication link to the individual artificial light sources 5a and 5b. For example, this communication link 8 may be implemented by means of a bus and the artificial light sources 5a and 5b may then have a corresponding connection and control units (not drawn) for enabling the connection of the respective light source 5a, 5b to the bus. The controller device 6 is configured to selectively activate and/or deactivate the light sources 5a, 5b by means of a respective control signal sent over the communication link 7, 8. Particularly, this allows for four different configurations in the form of different activation states, namely: (a) light source 5a on, light source 5b off; (b) light source 5a off, light source 5b on; (c) both light sources 5a, 5b on; (d) both light sources 5a, 5b off. In this way, the light modulation arrangement 2 may be (re-)configured through the controller device 6.

Referring to **Fig. 3**, which shows a system for controlling the light-dependent condition of an organism O according to an exemplary third embodiment 300 of the present invention, the system and its function are again similar to that of the systems of Fig. 1 and Fig. 2, however with the exception of a yet further different light modulation arrangement 2, which will now be described in more detail.

The light modulation arrangement 2 comprises one reconfigurable light modulation device comprising a container 40 having a hollow channel 40a for receiving a fluid comprising light modulating material, for example a liquid containing light modulating particles. The container 40 is transparent or at least semi-transparent to the light of light source 5, such that the light can pass through both the container 40 and the light modulating fluid in its channel 40a to transform ingoing light 9 into modulated outgoing light 10, to which the organism is then being exposed.

Furthermore, the light modulation arrangement 2 comprises a composition source for supplying one or more different compositions comprising at least one light modulating material to the channel 40a of the container 40. The composition source, in turn, comprises a pump 20a and a set of tanks 20b, 20c, 20 d and 20e for containing a respective type of light modulating fluid. Particularly, tanks 20b, 20c, 20d may each serve to store a different type of light modulating fluid, e.g. a fluid composition comprising ruby in tank 20b, a further fluid composition comprising MTO in tank 20c, and a yet further fluid composition comprising YMT in tank 20d. The pump 20a is configured to selectively pump a respective fluid composition from a selected one of the tanks 20b, 20c, 20d into the channel 40a of the container 40. Furthermore, it may be configured to pump a selected mix of at least two of the fluid compositions through respective pipes from the respective tanks 20b, 20c, 20d into the channel 40a. To that purpose, the pump 20a may comprise a set of one or more valves (not drawn). In this way, the light modulating property of the light modulating arrangement 2 may be selectively configured under the control of the controller device 6, which is adapted to communicate corresponding control information, e.g. configuration commands, over the communication link 8 to the light modulation arrangement 2, by selectively modifying the filling of channel 40a with one or more of the light modulating compositions from tanks 20b, 20c, 20d and optionally also from a further tank 20e. Specifically, the further tank 20e may either be used as a waste tank to collect fluid returning from the container 40, i.e. its channel 40a, or as a further storage tank for yet another light modulating fluid composition, e.g. a composition comprising CAZO as a light modulating material.

Particularly, Container 40 may be further configured as a cover, a roof (e.g. a corrugated roof or a roof tile), a wall or a floor, or an element for building one of the foregoing, of a host compartment for hosting said organism (such as a greenhouse, a planter or a stable). In some variants, the container may be made of a material comprising or consisting of polycarbonate, which is a particularly robust, low weight and light transparent material and thus a preferable material for building the container or parts thereof.

Referring to **Figs. 4A and 4B**, Channel 40a of container 40 may particularly be configured as a set of individual channels (cf. Fig. 4A) or as a single channel, which may particularly be winding through the body of container 40 (cf. Fig. 4B) in order to optimize the spatial coverage of the container's overall light modulating effect. While the embodiment according to figure 4A has the advantage that different fluid compositions from different tanks may be guided separately and without mixing among each other through the container 40, the embodiment according to Fig. 4B allows for mixing such different compositions, which may particularly be used for achieving an even higher spectral homogeneity across the outgoing light 10 as compared to the solution of Fig. 4A.

Referring to **Fig. 5**, which shows a system for controlling the light-dependent condition of an organism O according to an exemplary fourth embodiment 400 of the present invention, the system and its function are again similar to that of the systems of Figs. 1 to 4, however with the exception of a yet further different light modulation arrangement 2, which will now be described in more detail.

The system according to this fourth embodiment 400 may particularly be considered a modification of the system 300 illustrated in Fig. 3, wherein instead of container 40 an applicator 50 is provided to directly apply the selected one or more fluid light modulating compositions to organism O. Particularly the fluid composition may be applied selectively to different parts of the organism O. For example, if organism O is a plant, the fluid composition may be applied selectively the stem, the leaves or needles, the soil, the flowers, the fruits or other parts of the plant, as applicable and desired. This may particularly be useful, if enhancement of not only an overall growth of organism O, but rather enhancement of one or more individual growth aspects, e.g. leaf growth or fruit growth, is desired. Otherwise, system 400 and its function is similar to system 300 and its function, respectively.

Furthermore, a system for controlling the light-dependent condition of an organism O according to the present invention may comprise two or more light modulating arrangements 2 according to different embodiments, in particular as described above in connection with exemplary systems 100 to 400. For example, and without limitation, the light modulation arrangements of system 200 and system 300 or particularly 400 may be combined, particularly either in parallel, such that either one of the light modulating arrangements may be selected for applying light to a particular organism O, or cumulatively, such that the light to which the organism O is being exposed is modulated by two or more of these different light modulating arrangements 2 in order to achieve a combined light modulation effect.

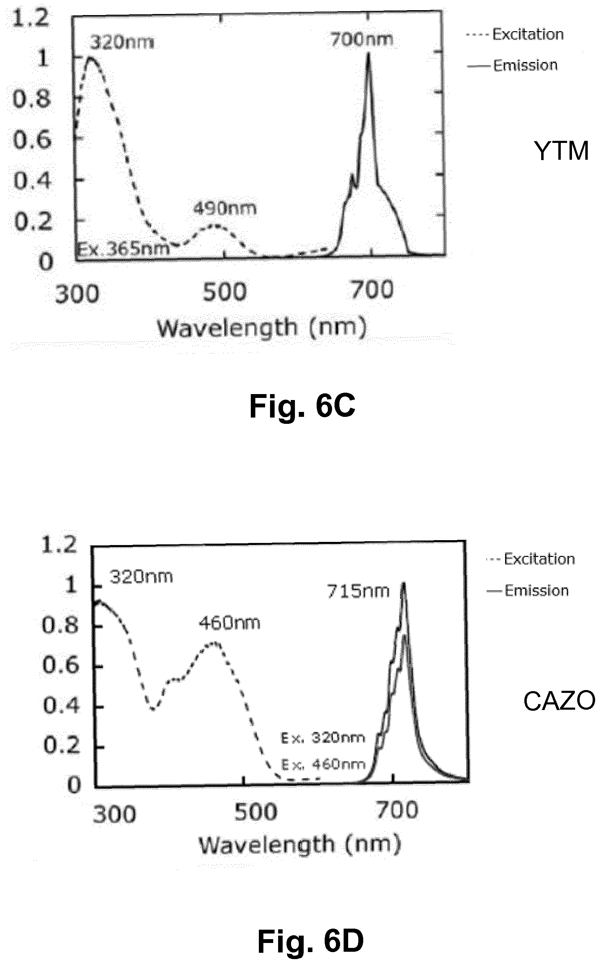

Referring to **Figs. 6A-6D**, different light modulating materials, which illustrate different spectra of ingoing and outgoing light, may be used according to preferred embodiments of the present invention and specifically with each of the systems described herein, including in particular systems 100 through 400. Specifically, Figs 6A-6D show respective intensity spectra (each normed to a maximum intensity value of 1) of incoming light 9 (dashed line) and outgoing light 10 (solid line) for four exemplary light-modulating phosphors, namely AL₂O₃Cr³⁺ (ruby, **Fig. 6A**), Mg₂TiO₄:Mn⁴⁺ (MTO, **Fig. 6B**), Y₂MgTiO₆:Mn⁴⁺ (YMT, **Fig. 6C**), and Ca₃Al₄ZnO₁₀ (CAZO, **Fig. 6D**). Specifically, in Fig. 6D the emission spectra relating to the two different excitation wavelengths 320 nm and 460 nm, respectively, are drawn individually for the purpose of also illustrating the dependence on the excitation wavelength. All four of these light modulating materials show a Stokes shift, i.e. a shift from incoming shorter wavelengths to outgoing longer wavelengths, the latter being focused particularly in a narrower wavelength range in the vicinity of 700 nm.

Referring to **Fig. 7**, an exemplary method 500 of determining a configuration of a modulating system according to the present invention, e.g. according to any one of figures 1 to 5 (being referred to hereinafter), comprises receiving 510 input information comprising sensor data representing at least one current environmental condition to which the organism O is currently being exposed (current sensor data) and scenario data defining the kind of the organism O (e.g. "strawberry plant") and at least one to-be-optimized growth effect of said organism O. The method further comprises processing 520 the input information by using a machine-learning-based process to derive therefrom control information for controlling the light modulation arrangement 2 of the modulating system 1.

The processing 520 may particularly be performed by the controller device 6 of the modulating system 1 or instead by the external processing platform 14. Typically, the other process steps of method 500 will be performed by the controller device 600, although other configurations are possible as well. In particular, the processing 520 may involve looking up predefined configuration data in a database, such as a lookup table, using the input information as search parameter(s) and retrieving configuration information defining a particular configuration of the light modulation arrangement 2 of the modulating system 1 in return. The content of the database, e.g. the lookup table, or the data retrieval process itself, or both, may be dynamic in such a way, that it is/they are regularly or continuously redefined based on the results of a machine-learning-based updating process, which may particularly be a supervised learning process using historical sensor data of previous measurements or iterations as input representing supervising information.

Method 500 further comprises outputting 530 the derived control information to the light modulation arrangement 2, in order to configure it accordingly. In addition, application data may be output, which represents at least one of or a combination of at least two of the following: (i) a degree, a duration, an amount, or a kind of the processing having occurred in relation to method 500, e.g. specifically in relation to processing 520; (ii) at least one characteristic of the related input information for such processing, e.g. the kind of organism O, or the desired growth effect, or both. The application information may particularly be used to determine indication of use for method 500, which may for example be used to determine based thereon a fee to be paid by a respective user.

Moreover, method 500 comprises storing the scenario data, the sensor data and/or the derived control information, at least in parts, to a data storage, which may particularly be implemented as a storage within controller device 6 or as a storage being external but assigned thereto. Storing the data does not only provide the advantage of making this stored information available for later review (e.g. for control purposes), but also of enabling a use of the stored information as supervising information serving as input to the machine learning process. Particularly, a comparison of the current sensor data with corresponding historical sensor data may be used to determine actual growth effects having occurred at the organism O, wherein the result of this comparison may be correlated with the corresponding control information and/or scenario data for the purpose of determining their impact on the achieved growth effect.

Referring to **Fig. 8**, preferred combinations of selected types of organisms, which may be treated with the system for controlling the light-dependent condition of an organism of the present invention for the purpose of achieving one or more enhanced growth effects are shown in relation to preferred light modulating materials to be used for the treatment of such respective organisms. Specifically, the table of Fig. 8 illustrates that some light-modulating materials are more suitable for treatment of a given organism than others and that there are also preferable ways of application (here exemplarily (i) "sheet", which relates for example to the embodiments of Figs.1 and 3, and (ii) "spray", which relates for example to the embodiment of Fig. 4). Accordingly, the systems and methods presented herein are particularly suitable to reflect these differences and allow for an optimal (re-)configuration of the respective light modulation arrangement in view of the particular needs of the organism to be treated.

Referring to **Fig. 9**, an exemplary method of determining a suitable light modulating material to be used in a light modulating system according to the present invention, e.g. according to any one of Figs. 1 to 5, may be implemented by means of an application running on a local or mobile computer, such as for example a desktop, laptop or tablet computer, or even a smart phone. Specifically, according to some variants, the computer may be at the same time the controller device 6, e.g. of system 100, 300 or 400.

For the purpose of illustration, the following description of the method of Fig. 9 relates to a situation, where a farmer or "grower" intends to determine, with the help of an application running on his local or mobile computer, a suitable light modulating material, or in other words a suitable configuration of his light modulating system according to the present invention, for a particular type of crop in the grower's greenhouse in order to optimize its growth. In this example, natural sunlight is to be used as a light source for the incoming light 9 instead of or at least in addition to artificial light sources, like those described above.

A first process 610 of the exemplary method comprises starting the application or a specific feature within the application that relates to determining a suitable light modulating material to be used in a given, i.e. the grower's, light modulating system. In a further process 620, the location of the grower, i.e. the computer or the greenhouse, is being determined using a location determination technology, such as for example GPS, with the help of a respective location determination module within the computer or anywhere else within the overall system.

In a further process 630, the computer attempts to establish an Internet connection, if not already present, and if such connection is successfully established (process 640 - yes), the application continues in process 650 to access and receive spectral data representing one or more characteristic, location-dependent properties of the sunlight spectrum related to the specific location identified in process 620 over the Internet from a respective source, such as a database provided on a central external server, e.g. by NASA or ESA (American and European Space agencies, respectively) or other organizations providing such information to the public or to customers on a contract basis. Otherwise (process 640 - no), process 650 is skipped.

The application then requests in process 660, over a man-machine-interface (MMI) of the computer, e.g. MMI 6a, an input providing further details on the greenhouse. In a subsequent process 670, the application receives the corresponding inputs provided by a user through the man-machine-interface, e.g. details on the provider and type of the greenhouse, or the material, especially roof and sidewall material, used to construct the greenhouse.

In process 680, and estimation of the specific sunlight spectrum and (esp. maximum or average or as a function of time) intensity available within the greenhouse is calculated based on the information provided in process 650, if applicable, and in process 670. The spectrum in the greenhouse might particularly depend on the geolocation of the greenhouse, its orientation, an angle of the roof or walls, e.g. relative to the surface of the earth at the location, or the material of the roof and walls, respectively. Due to the variable path of the sun in the sky (daily and over the year), the spectrum, respectively at least one characteristic property thereof, will preferably be determined as a function of time.

In addition, the application requests in process 690 further input, namely scenario data including a selection of the type of crop to be treated in the greenhouse with light to be modulated by the light modulating material to be selected with the help of the application, and optionally also at least one to-be-optimized growth effect of said crop or parts thereof. Such input scenario data is received in process 700.

Then, in process 710, the best modulating material under the given conditions, namely the determined available spectrum in the greenhouse and the scenario data, is being determined by correlating the needs of the given crop to the spectrum in the greenhouse and the particular properties of various available light modulating materials. Specifically, process 710 may be similar to the corresponding process that 520 of method 500 of Fig. 7, and may optionally also form part of a machine-learning-based process in a similar manner as described in connection with Fig. 7. In the final step 720, the determined result identifying the determined optimal modulating material (or equivalently, the optimal configuration of the grower's light modulating system being available in the greenhouse) is output, via the man-machine-interface, e.g. MMI 6a in order to enable the grower to configure his system accordingly. Alternatively or cumulatively, the output may be directly used to control the light modulation arrangement 2 of the system in order to automatically (re-)configure it according to the determined optimal configuration.

Specifically, the present invention may be implemented according to any one of the following enumerated embodiments:
1. Modulating system for modulating light to which an organism, preferably a plant, is to be exposed, the system comprising:
   a light modulation arrangement comprising one or more light modulation devices, being adapted to modulate, by means of a respective light modulating material, light to be applied to the organism;
   wherein the light modulation arrangement is reconfigurable such that there are at least two selectable configurations of the light modulation arrangement each of which causes a respective different modulation of the light to be applied to the organism.
2. The modulating system of embodiment 1, wherein the light modulating material comprises at least one luminescent material, preferably at least one phosphor.
3. The modulating system of embodiment 2, wherein the light modulating material comprises a matrix material and one or more of or a combination of two or more of the following:
   (a) a composition comprising at least one phosphor, wherein the phosphor has a peak emission light wavelength in the range of less than 500 nm or more than 600 nm;
   (b) a composition comprising at least one phosphor having a peak wavelength of light emitted from the phosphor in the range of 650 nm or more, preferably in the range from 650 to 1500 nm, more preferably in the range from 650 to 1000 nm, even more preferably in the range from 650 to 800 nm, furthermore preferably in the range from 650 to 750 nm, much more preferably it is from 660 nm to 730 nm, most preferably from 670 nm to 710nm;
   (c) at least one phosphor having a peak wavelength of light emitted from the phosphor in the range of 500 nm or less, preferably in the range from 250 nm to 500 nm, more preferably in the range from 300 nm to 500 nm, even more preferably in the range from 350 nm to 500 nm, furthermore preferably in the range from 400 nm to 500nm, much more preferably in the range from 420 nm to 480 nm, most preferably in the rage from 430 nm to 460 nm;
   (d) at least one phosphor having a first peak wavelength of light emitted from the phosphor in the range of 500nm or less, and a second peak wavelength of light emitted from the phosphor in the range of 650 nm or more, preferably the first peak wavelength of light emitted from the phosphor is in the range from 250nm to 500nm, and the second peak light emission wavelength is in the range from 650 nm to 1500 nm, more preferably the first peak wavelength of light emitted from the phosphor is in the range from 300nm to 500nm, and the second peak light emission wavelength is in the range from 650 nm to 1000 nm, even more preferably the first peak wavelength of light emitted from the phosphor is in the range from 350nm to 500nm, and the second peak light emission wavelength is in the range from 650 nm to 800 nm, furthermore preferably the first peak wavelength of light emitted from the phosphor is in the range from 400nm to 500nm, and the second peak light emission wavelength is in the range from 650 nm to 750 nm, much more preferably the first peak wavelength of light emitted from the phosphor is in the range from 420 nm to 480 nm, and the second peak light emission wavelength is in the range from 660 nm to 740 nm, most preferably the first peak wavelength of light emitted from the phosphor is in the rage from 430 nm to 460 nm and the second peak wavelength of light emitted from the phosphor is in the range from 660 nm to 710 nm.
4. The modulating system of any one of the preceding embodiments, wherein the light modulation arrangement comprises at least one reconfigurable light modulation device comprising:
   a container configured to receive a filling with a composition comprising at least one light modulating material, the container being configured to reflect, redirect, and/or pass incoming light from one or more light sources and to modulate said incoming light by means of said composition such that the outgoing reflected, redirected, and/or passed light to be applied to said organism is modulated accordingly; and
   a composition source for supplying one or more different compositions to the container, wherein the light modulation device is reconfigurable in that the source is adapted to modify:
      (a) at least one of the supplied one or more compositions with respect to at least one parameter of it that affects the light modulation effect of the composition, or
      (b) a selection of two or more of the compositions to be supplied.
5. The modulating system of embodiment 4, wherein at least a portion of the container is a predominantly two-dimensional structure comprising at least one hollow chamber for receiving the fluid composition.
6. The modulating system of embodiment 5, wherein said container is further configured as a cover, a roof, a wall or a floor, or an element for building one of the foregoing, of a host compartment for hosting said organism.
7. The modulating system of any one of embodiments 4 to 6, wherein the plate-formed portion of the container comprises two or more separate, unconnected hollow chambers, each forming a channel for one or more of the at least one composition.
8. The modulating system of any one of embodiments 4 to 7, wherein.
   the composition source comprises two or more tanks for storage of a respective number of different compositions; and,
   the composition source is further configured to perform said modification of the supplied composition by way of either selectively supplying the composition from a different tank than before or by selectively mixing the respective compositions of at least two of the tanks and supplying the resulting mix of different compositions to the container.
9. The modulating system of any one of the preceding embodiments, wherein the light modulation arrangement comprises at least one reconfigurable light modulation device comprising a surface comprising the light modulating material and being configured to reflect, re-direct and/or selectively pass light and thereby modulate it by means of the light modulating material, wherein the light modulation device is reconfigurable in that the light modulation arrangement as a whole or the light modulation device individually is capable of translating and/or rotating at least a portion of the surface.
10. The modulating system of embodiment 9, wherein said surface is at least partially covered by a coating comprising said light modulating material.
11. The modulating system of embodiment 9 or 10, wherein said at least one reconfigurable light modulation device comprises a translatable and/or rotatable shading element comprising said surface.
12. The modulating system of any one of embodiments 9 to 11, wherein said at least one reconfigurable light modulation device comprises one of or a combination of at least two of a card, a foil, a fabric, and a net forming at least a portion of said surface.
13. The modulating system of any one of the preceding embodiments, wherein the light modulation arrangement comprises at least one reconfigurable light modulation device comprising an applicator for applying a fluid composition containing said light modulating material to one or more of said organisms, wherein the light modulation device is reconfigurable in that at least one operating parameter of the applicator that has an effect on at least one of or a combination of at least two of a timing, an amount, a duration, a concentration of light modulating material, and a way of application of the fluid composition is modifiable.
14. The modulating system of any one of the preceding embodiments, wherein the light modulation arrangement is adapted to be automatically reconfigurable in response and according to received control information to cause the light modulation arrangement to transition to a configuration defined by the control information.
15. The modulating system of any one of the preceding embodiments, further comprising an artificial light source comprising said light modulating material in such a way that at least a portion of the artificial light emitted from the artificial light source is modulated by the modulating material.
16. The modulating system of embodiment 15, wherein said artificial light source comprises at least one of or a combination of at least two of:
   - a light emitting diode, LED;
   - an incandescent light bulb lamp;
   - a halogen lamp;
   - a fluorescent lamp;
   - a metal halide lamp;
   - a sulfur lamp;
   - a sodium lamp;
   - a neon lamp;
   - an electrodeless lamp;
   wherein at least one of the LEDs and/or lamps of the artificial light source comprises or is coated with said light modulating material.
17. The modulating system of any one of the preceding embodiments, further comprising:
   a sensor system configured to measure at least one environmental condition to which the organism is exposed and to output sensor data representing one or more respective measurement results.
18. The modulating system of embodiment 17, wherein the measurement results represented by the sensor data relate to at least one of or a combination of at least two of the following environmental conditions to which the organism is exposed:
   - a temperature;
   - an intensity or a spectrum of an electromagnetic radiation or a shift of such spectrum relative to a preceding reference point in time or timeframe;
   - humidity;
   - moisture of soil;
   - available nutrition in the soil;
   - air pressure;
   - sound;
   - a concentration of carbon dioxide and/or oxygen;
   - wind or other air flows;
   - electrical and/or magnetic fields;
   - Gravitational field;
   - chemical composition of environment and/or soil;
   - pH level of soil;
   - soil reflectivity;
   - topography of environment.
19. The modulating system of embodiment 17 or 18, wherein the sensor data further represents at least one of or a combination of at least two of the following quantities relating to a state, preferably a growth state, of said organism and to output the corresponding measurement results as part of the sensor data:
   - growth rate of the organism as a whole or one or more specific parts thereof;
   - an amount of organic matter;
   - biological activity;
   - biomass;
   - morphology;
   - color of organism or one or more specific parts thereof;
   - diseases;
   - kind and/or level of present pathogens; and/or
   if the quantity to be measured relates specifically to one or more plants:
   - plant size, leaf size, stem size, size or ripening state or other appearance or property of at least one fruit;
   - a level of performed photosynthesis;
   - motion of one or more plant parts;
   - weed occurrence
   - salinity
   - leaf area, count, color and/or size;
   - leaf color
   - N-Index.
20. The modulating system of any one of embodiments 17 to 19, wherein the sensor data further represents a location related to the measurement.
21. The modulating system of any one of the preceding embodiments, further comprising a mounting system for mounting at least one of said light modulating devices and/or a sensor system for providing the sensor data, or one or more portions of any of the foregoing, to one or more support structures.
22. The modulating system of any one of the preceding embodiments, further comprising a man-machine-interface configured to perform one or more of the following functions:
   - receive user inputs, preferably including scenario data defining a respective kind of the organism and/or at least one to-be-optimized growth effect of said organism or parts thereof;
   - output control information requesting a user to initiate a transition process for transitioning the light modulation arrangement to the configuration defined by the control information;
   - initiate a communication over a communication link to a remote communication device.
23. The modulating system of embodiment 22, wherein the man-machine-interface is configured to output the control information, at least in parts, in the form of augmented reality information to support a human user to correctly initiate a non-automatic configuration of the light modulation arrangement.
24. A method of determining a configuration of the modulating system of any one of the preceding embodiments for modulating light to which an organism is to be exposed, the method comprising:
   receiving input information comprising data representing at least one environmental condition to which the organism is currently or was previously or is to be exposed;
   processing the input information to derive therefrom control information defining an optimized configuration of the light modulation arrangement of said modulation system in dependence on scenario data defining a respective kind of the organism and/or at least one to-be-optimized growth effect of said organism; and
   outputting the control information to initiate or request a transition process for transitioning the light modulation arrangement to the configuration defined by the control information.
25. The method of embodiment 24, wherein the received scenario data represents at least one of or a combination of at least two of the following to-be-optimized growth effects of said organism:
   - organism growth rate or resulting size;
   - vegetative growth;
   - reproductive growth;
   - switch between different growth states, such as vegetative to reproductive
   - harmonized plant growth among a plurality of said organisms;
   - fruit development;
   - morphology;
   - activate and de-activating genes
   if the organism is one or more plants:
   - root growth;
   - seedling development and establishment;
   - secondary metabolites;
   - weed growth;
   - pest resistance.
26. The method of embodiment 24 or 25, wherein the data representing at least one environmental condition comprises data representing at least one specific property of a spectrum of incoming light to which the light modulation arrangement is tol be exposed to generate the modulated light to which the organism is to be exposed.
27. The method of any one of embodiments 24 to 26, wherein:
   processing the input information to derive therefrom the control information comprises defining the control information as a function of time and outputting the control information comprises outputting said control information as a function of time.
28. The method of any one of embodiments 24 to 27, further comprising applying machine learning to self-adapt over time its capability of processing received input information to derive therefrom corresponding control information.
29. The method of embodiment 28, further comprising using current and/or previously received input information including respective sensor data representing one or more respective historical measurement results for at least one or a combination of at least two to-be-optimized growth effects of said organism as feedback input for the machine learning process.
30. The method of embodiment 28 or 29, wherein the applied machine learning involves one or more of or a combination of at least two of the following: an artificial neural network, a genetic algorithm, a fuzzy logic controller, an algorithm based on Grey relational analysis.
31. The method of any one of embodiments 24 to 30, further comprising storing the received input information and/or the control information derived therefrom into a database for later retrieval and/or use as historical information
32. The method of any one of embodiments 24 to 31, further comprising outputting application data representing at least one of or a combination of at least two of the following:
   - a degree, a duration, an amount, or a kind of the processing having occurred in relation to one or more specified modulation systems according to any one of embodiments 1 to 23;
   - at least one characteristic of the related input information for such processing.
33. A computer program configured to perform the method of any one of embodiments 24 to 32.
34. A processing platform configured to perform the method of any one of embodiments 24 to 32.
35. System for controlling a light-dependent condition of an organism, preferably of a plant, the system comprising:
   a modulating system of any one of embodiments 1 to 23; and
   a processing platform of embodiment 34,
   wherein the modulating system is configured to output said input information and the processing platform is configured to perform the method of any one of embodiments 24 to 32 to receive and process said input information and to output the resulting control information, and the modulating system is further configured to receive said resulting control information to initiate automatically or request a user to initiate a transition process for transitioning the light modulation arrangement to the configuration defined by the control information.
36. Use of the modulating system of any one of embodiments 1 to 23, the method of any one of embodiments 24 to 32, the computer program of embodiment 33, the processing platform of embodiment 34, or the system of embodiment 35 for one or more of the following: agriculture, cultivation of algae, bacteria, preferably photosynthetic bacteria, planktons, preferably photo planktons.

While above at least one exemplary embodiment of the present invention has been described, it has to be noted that a great number of variations thereto exists. Furthermore, it is appreciated that the described exemplary embodiments only illustrate non-limiting examples of how the present invention can be implemented and that it is not intended to limit the scope, the application or the configuration of the herein-described apparatus' and methods. Rather, the preceding description will provide the person skilled in the art with constructions for implementing at least one exemplary embodiment of the invention, wherein it has to be understood that various changes of functionality and the arrangement of the elements of the exemplary embodiment can be made, without deviating from the subject-matter defined by the appended claims and their legal equivalents.

### LIST OF REFERENCE SIGNS

- O: organism, e.g. plant
- O_{R}: reference organism

- 1: light modulating system
- 2: light modulation arrangement
- 2a: housing with slots for receiving light modulation devices 3, 4
- 2b: mounting system for light modulation arrangement
- 3, 4: light modulation devices in the form of sheets
- 3a, 4a: carrier sheets of light modulation devices
- 3b, 4b: coatings of light modulating material on carrier sheets 3a, 4a
- 5, 5a, 5b: artificial light source(s)
- 6: controller device
- 6a: man-machine-interface for control device cash document
- 7: communication link between controller device and artificial light source(s)
- 8: communication link between controller device and light modulation arrangement
- 9: incoming light
- 10: (modulated) outgoing light
- 10a: (modulated) outgoing light of first artificial light source 5a
- 10b: (modulated) outgoing light of second artificial light source 5b
- 11: sensor system
- 11a: mounting system for sensor system
- 11b: location determination function or module of sensor system 11
- 11c: antenna for location determination function module 11b
- 12: communication link between controller device and sensor system
- 13: sensor probe(s)
- 14: processing platform
- 15: company patient link between processing platform and controller device
- 20a: pump
- 20 b-d: tanks for different light modulating fluids
- 20e: waste tank, especially for mixes of different light modulating fluids
- 30a, b: light modulating devices in the form of coatings of light modulating material on artificial light sources 5a, 5b
- 40: light modulating device in the form of a container, e.g. roof tile
- 40a: hollow channel for receiving light modulating fluid
- 50: light modulating device in the form of an applicator for applying fluid light modulating material to organism O

- 100: Exemplary first embodiment of a system for controlling the light-dependent condition of an organism
- 200: Exemplary second embodiment of a system for controlling the light-dependent condition of an organism
- 300: Exemplary third embodiment of a system for controlling the light-dependent condition of an organism
- 400: Exemplary fourth embodiment of a system for controlling the light-dependent condition of an organism
- 500: Exemplary method of determining a configuration of a modulating system
- 600: A further exemplary method of determining a suitable light modulating material and a suitable configuration, respectively, of a modulating system

## Claims

1. Modulating system (1) for modulating light to which an organism (O), preferably a plant, is to be exposed, the modulating system (1) comprising:
a light modulation arrangement (2) (2) comprising one or more light modulation devices (3, 4; 30a, 30b; 40, 20a; 50, 20a), being adapted to modulate, by means of a respective light modulating material, light to be applied to the organism (O);
wherein the light modulation arrangement (2) is reconfigurable such that there are at least two selectable configurations of the light modulation arrangement (2) each of which causes a respective different modulation of the light (9) to be applied to the organism (O).

2. The modulating system (1) of claim 1, wherein the light modulating material comprises at least one luminescent material, preferably at least one phosphor.

3. The modulating system (1) of claim 2, wherein the light modulating material comprises a matrix material and one or more of or a combination of two or more of the following:
(a) a composition comprising at least one phosphor, wherein the phosphor has a peak emission light wavelength in the range of less than 500 nm or more than 600 nm;
(b) a composition comprising at least one phosphor having a peak wavelength of light emitted from the phosphor in the range of 650 nm or more, preferably in the range from 650 to 1500 nm, more preferably in the range from 650 to 1000 nm, even more preferably in the range from 650 to 800 nm, furthermore preferably in the range from 650 to 750 nm, much more preferably it is from 660 nm to 730 nm, most preferably from 670 nm to 710nm;
(c) at least one phosphor having a peak wavelength of light emitted from the phosphor in the range of 500 nm or less, preferably in the range from 250 nm to 500 nm, more preferably in the range from 300 nm to 500 nm, even more preferably in the range from 350 nm to 500 nm, furthermore preferably in the range from 400 nm to 500nm, much more preferably in the range from 420 nm to 480 nm, most preferably in the rage from 430 nm to 460 nm;
(d) at least one phosphor having a first peak wavelength of light emitted from the phosphor in the range of 500nm or less, and a second peak wavelength of light emitted from the phosphor in the range of 650 nm or more, preferably the first peak wavelength of light emitted from the phosphor is in the range from 250nm to 500nm, and the second peak light emission wavelength is in the range from 650 nm to 1500 nm, more preferably the first peak wavelength of light emitted from the phosphor is in the range from 300nm to 500nm, and the second peak light emission wavelength is in the range from 650 nm to 1000 nm, even more preferably the first peak wavelength of light emitted from the phosphor is in the range from 350nm to 500nm, and the second peak light emission wavelength is in the range from 650 nm to 800 nm, furthermore preferably the first peak wavelength of light emitted from the phosphor is in the range from 400nm to 500nm, and the second peak light emission wavelength is in the range from 650 nm to 750 nm, much more preferably the first peak wavelength of light emitted from the phosphor is in the range from 420 nm to 480 nm, and the second peak light emission wavelength is in the range from 660 nm to 740 nm, most preferably the first peak wavelength of light emitted from the phosphor is in the rage from 430 nm to 460 nm and the second peak wavelength of light emitted from the phosphor is in the range from 660 nm to 710 nm.

4. The modulating system (1) of any one of the preceding claims, wherein the light modulation arrangement (2) comprises are configurable light modulation device comprising:
a container (40) configured to receive a filling with a composition comprising at least one light modulating material, the container (40) being configured to reflect, redirect, and/or pass incoming light (8) from one or more light sources (5) and to modulate said incoming light (8) by means of said composition such that the outgoing reflected, redirected, and/or passed light (9) to be applied to said organism (O) is modulated accordingly; and
a composition source (20a to 20e) for supplying one or more different compositions to the container (40), wherein the light modulation device is reconfigurable in that the composition source (40) is adapted to modify:
at least one of the supplied one or more compositions with respect to at least one parameter of it that affects the light modulation effect of the composition, or
a selection of two or more of the compositions to be supplied.

5. The modulating system (1) of claim 4, wherein at least a portion of the container (40) is a predominantly two-dimensional structure comprising at least one hollow chamber (40a) for receiving the one or more compositions.

6. The modulating system (1) of claims 4 or 5, wherein the container (40) comprises two or more separate, unconnected hollow chambers (40a), each forming a channel for one or more of the at least one composition.

7. The modulating system (1) of any one of claims 4 to 6, wherein.
the composition source comprises two or more tanks (20b to 20e) for storage of a respective number of different compositions; and,
the composition source is further configured to perform said modification of the supplied composition by way of either selectively supplying the composition from a different tank than before or by selectively mixing the respective compositions of at least two of the tanks (20b to 20e) and supplying the resulting mix of different compositions to the container (40).

8. The modulating system (1) of any one of the preceding claims, wherein the light modulation arrangement (2) comprises at least one reconfigurable light modulation device (3; 4) comprising a surface (3b; 4b) comprising the light modulating material and being configured to reflect, re-direct and/or selectively pass light and thereby modulate it by means of the light modulating material, wherein the light modulation device is reconfigurable in that the light modulation arrangement (2) as a whole or the light modulation device (3; 4) individually is capable of translating and/or rotating at least a portion of the surface.

9. The modulating system (1) of any one of the preceding claims, wherein the light modulation arrangement (2) comprises at least one reconfigurable light modulation device (20a to 20d, 50) comprising an applicator (50) for applying a fluid composition containing said light modulating material to one or more of said organisms (O), wherein the light modulation device is reconfigurable in that at least one operating parameter of the applicator (50) that has an effect on at least one of or a combination of at least two of a timing, an amount, a duration, a concentration of light modulating material, and a way of application of the fluid composition is modifiable.

10. The modulating system (1) of any one of the preceding claims, wherein the light modulation arrangement (2) is adapted to be automatically reconfigurable in response and according to received control information to cause the light modulation arrangement (2) to transition to a configuration defined by the control information.

11. The modulating system (1) of any one of the preceding claims, further comprising an artificial light source (5a; 5b) comprising said light modulating material (30a; 30b) in such a way that at least a portion of the artificial light emitted from the artificial light source is modulated by the modulating material (30a; 30b).

12. The modulating system (1) of any one of the preceding claims, further comprising: a sensor system (11, 11a to 11c) configured to measure at least one environmental condition to which the organism (O) is exposed and to output sensor data representing one or more respective measurement results.

13. The modulating system (1) of claim 12, wherein the sensor data further represents at least one of or a combination of at least two of the following quantities relating to a state, preferably a growth state, of said organism (O) and to output the corresponding measurement results as part of the sensor data:
- growth rate of the organism (O) as a whole or one or more specific parts thereof;
- an amount of organic matter;
- biological activity;
- biomass;
- morphology;
- color of organism (O) or one or more specific parts thereof;
- diseases;
- kind and/or level of present pathogens; and/or
if the quantity to be measured relates specifically to one or more plants:
- plant size, leaf size, stem size, size or ripening state or other appearance or property of at least one fruit;
- a level of performed photosynthesis;
- motion of one or more plant parts;
- weed occurrence
- salinity
- leaf area, count, color and/or size;
- leaf color
- N-Index.

14. The modulating system (1) of any one of the preceding claims, further comprising a mounting system (2b; 11a) for mounting at least one of said light modulation arrangement (2) and/or a sensor system (2b; 11a) for providing the sensor data, or one or more portions of any of the foregoing, to one or more support structures.

15. The modulating system (1) of any one of the preceding claims, further comprising a man-machine-interface (6a) configured to perform one or more of the following functions:
- receive user inputs, preferably including scenario data defining a respective kind of the organism (O) and/or at least one to-be-optimized growth effect of said organism (O) or parts thereof;
- output control information requesting a user to initiate a transition process for transitioning the light modulation arrangement (2) to the configuration defined by the control information;
- initiate a communication over a communication link (15) to a remote communication device (14).

16. The modulating system (1) of claim 15, wherein the man-machine-interface (6a) is configured to output the control information, at least in parts, in the form of augmented reality information to support a human user to correctly initiate a non-automatic configuration of the light modulation arrangement (2).

17. A method (500) of determining a configuration of the modulating system (1) of any one of the preceding claims for modulating light to which an organism (O) is to be exposed, the method comprising:
receiving (510) input information comprising data representing at least one environmental condition to which the organism (O) is currently, was previously, or is to be exposed;
processing (520) the input information to derive therefrom control information defining an optimized configuration of the light modulation arrangement (2) of said modulation system in dependence on scenario data defining a respective kind of the organism (O) and/or at least one to-be-optimized growth effect of said organism (O); and
outputting (530) the control information to initiate or request a transition process for transitioning the light modulation arrangement (2) to the configuration defined by the control information.

18. The method of claim 17, wherein the received scenario data represents at least one of or a combination of at least two of the following to-be-optimized growth effects of said organism (O):
- organism (O) growth rate or resulting size;
- vegetative growth;
- reproductive growth;
- switch between different growth states, such as vegetative to reproductive
- harmonized plant growth among a plurality of said organism (O)s;
- fruit development;
- morphology;
- activate and de-activating genes
if the organism (O) is one or more plants:
- root growth;
- seedling development and establishment;
- secondary metabolites;
- weed growth;
- pest resistance.

19. The method of claim 17 or 18, wherein the data representing at least one environmental condition comprises data representing at least one specific property of a spectrum of incoming light to which the light modulation arrangement (2) is to be exposed to generate the modulated light to which the organism (O) is to be exposed.

20. The method of any one of claims 17 to 19, wherein:
processing (520) the input information to derive therefrom the control information comprises defining the control information as a function of time and outputting (530) the control information comprises outputting said control information as a function of time.

21. The method of any one of claims 17 to 20, further comprising applying machine learning to self-adapt over time its capability of processing received input information to derive therefrom corresponding control information.

22. The method of claim 21, further comprising using current and/or previously received input information including respective sensor data representing one or more respective historical measurement results for at least one or a combination of at least two to-be-optimized growth effects of said organism (O) as feedback input for the machine learning process.

23. A computer program configured to perform the method of any one of claims 17 to 22.

24. A processing platform (14) configured to perform the method of any one of claims 17 to 22.

25. System (100; 200; 300; 400) for controlling a light-dependent condition of an organism (O), preferably of a plant, the system (100; 200; 300; 400) comprising:
a modulating system (1) of any one of claims 1 to 16; and
a processing platform (14) of claim 24,
wherein the modulating system (1) is configured to output said input information and the processing platform (14) is configured to perform the method of any one of claims 17 to 22 to receive and process said input information and to output the resulting control information, and the modulating system (1) is further configured to receive said resulting control information to initiate automatically or request a user to initiate a transition process for transitioning the light modulation arrangement (2) to the configuration defined by the control information.

26. Use of the modulating system (1) of any one of claims 1 to 16, the method (500) of any one of claims 17 to 22, the computer program of claim 23, the processing platform (14) of claim 34, or the system (100; 200; 300; 400) of claim 35 for one or more of the following: agriculture, cultivation of algae, bacteria, preferably photosynthetic bacteria, planktons, preferably photo planktons.
